# EUROPÄISCHE PATENTSCHRIFT

(11) **EP 0 714 822 B1**
(45) Veröffentlichungstag und Bekanntmachung des Hinweises auf die Patenterteilung: **24.07.2002**
(21) Anmeldenummer: 95116397.1
(22) Anmeldetag: 18.10.1995
(51) Int. Cl.: B61H 11/16, B60T 13/40, B60T 8/18

(54) **Ganzzug mit einem aus Bremsmodulen bestehenden Bremssystem**
Train with a brake system made of braking modules
Train équipé d'un système de freinage composé de modules de freinage

(30) Priorität: 30.11.1994 DE 4442503
(43) Veröffentlichungstag der Anmeldung: 05.06.1996
(73) Patentinhaber: ALSTOM LHB GmbH, 38239 Salzgitter (DE)
(72) Erfinder: Beier, Günter, Dipl.-Ing., D-38259 Salzgitter (DE)

(56) Entgegenhaltungen:
- EP-A- 0 249 816
- EP-A- 0 537 702
- US-A- 1 459 250
- US-A- 4 793 449

## Beschreibung

Die Erfindung betrifft einen Ganzzug, bestehend aus Drehgestellen mit dazwischen eingehängten Lastenträgern sowie einem Bremssystem.

Aus der EP 403 021 A1 und aus der DE 41 18 759 A1 ist ein Eisenbahnsystem/Ganzzug bekannt, bei dem Lastenträger zwischen zwei Drehgestellen eingehängt sind, wobei ein Drehgestell jeweils einen ersten Lastenträger und gleichermaßen einen zweiten Lastenträger abstützen soll. Als Lastenträger finden Tragrahmen und Containergestelle, bei der EP 0 403 021 A1 auch Sattelauflieger Verwendung.

Bei diesem System weisen die Lastenträger, auch Trageinsätze. oder Tragrahmen genannt, einerseits Aufnahme-und Befestigungseinrichtungen für Ladebenältnisse als auch für Einrichtungen für die Eisenbahntechnik, wie z. B. Druckluftbehälter, Luftleitungen und Teile der Bremseinrichtung auf. Es können daher zwar geringfügig angepasste Standard-Drehgestelle verwendet werden, die Lastenträger sind jedoch aufwendiger und schwerer ausgebildet und wegen der angebauten Teile der Bremstechnik sorgfältiger zu behandeln.

Auch ist es bekannt, möglichst viele Teile der Bremseinrichtung in das Drehgestell zu verlagern, um die Lastenträger möglichst einfach, leicht und robust auszubilden. Dadurch werden allerdings die benötigten Drehgestelle aufwendiger ausgebildet und wartungsintensiver. Es können keine Standard-Drehgestelle mehr verwendet werden.

Der Erfindung liegt die Aufgabe zugrunde einen Ganzzug, bestehend aus Drehgestellen mit dazwischen eingehängten Lastenträgern sowie einem Bremssystem, derart auszubilden, dass die Verwendung von einfach ausgebildeten, geringfügig angepassten Standard-Drehgestellen und einfach und robust ausgebildeten Lastenträgern ermöglicht ist.

Die Aufgabe wir durch das im Anspruch 1 gekennzeichnete Bremssystem gelöst.

Zweckmäßige Weiterbildungen sind in den Unteransprüchen angegeben.

Ein Ausführungsbeispiel der Erfindung ist nachfolgende Unter Bezugnahme auf die Zeichnung näher beschrieben. Es zeigt:

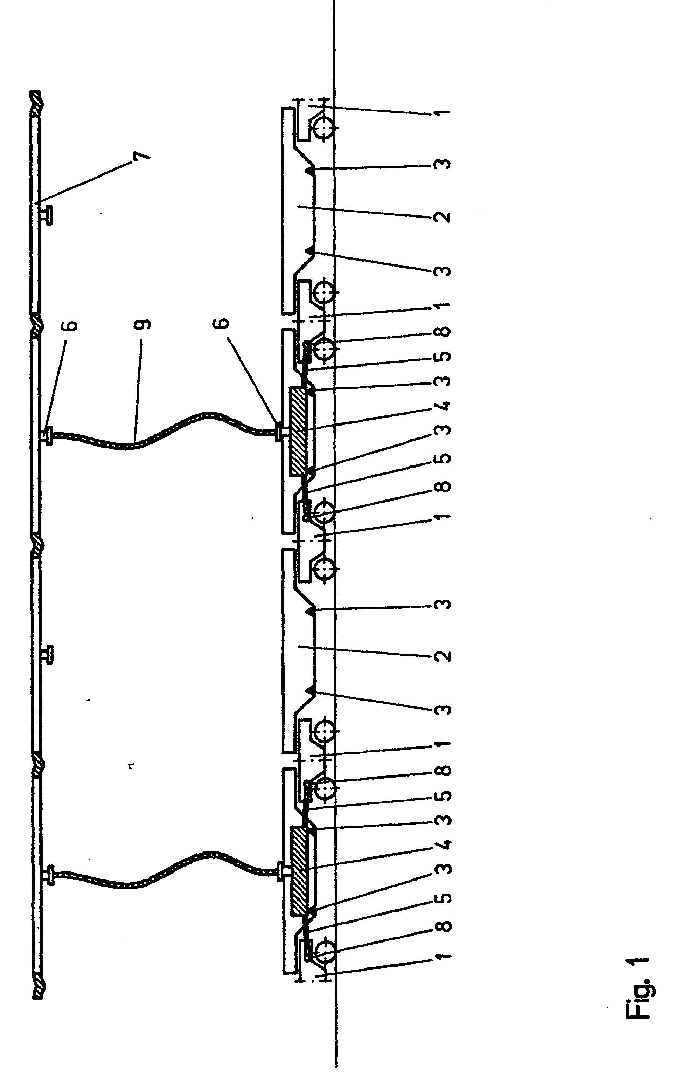

- Fig. 1:: einen Ganzzug mit Bremssystem in schematischer Darstellung.

Ein schematisch in Fig. 1 dargestellter Ganzzug besteht aus Drehgestellen 1, zwischen die jeweils ein Lastenträger 2 auch Tragrahmen oder Trageinsatz genannt, eingehängt ist. Der,Lastenträger 2 weist eine Aufnahmeeinrichtung 3 für ein Bremsmodul 4 auf, das als eigenständige, kompakte Einheit ausgebildet ist. Das Bremsmodul 4 ist mit dem Lastenträger 2 lösbar verbindbar.

In dem Bremsmodul 4 sind die wesentlichen Teile der Bremseinrichtung angeordnet, die üblicherweise am Lastenträger 2 verteilt befestigt sind. Als wesentliche Teile sind die Komponeten Bremszugstangen 5, Bremszylinder, Gestängeteller, Bremshebel, Bremssteuerventil, G/P-Umstelleinrichtung, Ein-/Aus-Betätigung der Bremse, Lösezug, Handbremsbetätigung und Schlauchkupplungselement 6 zur Verbindung mit der Hauptluftleitung 7 zu nennen.

Das Bremsmodul 4 enthält summarisch oder alternativ die vorgenannten Bremselemente der Bremseinrichtung.

Das Bremsmodul 4 ist stapelbar und kranbar ausgebildet.

Das Bremsmodul 4 weist vorteilhaft zwei Bremszylinder und zwei Bremszugstangen 5 auf, von denen jeweils eines je einem Drehgestell 1 zugeordnet ist. Dadurch ist es möglich, dass jedes Bremsmodul 4 zwei Drehgestelle 1 ansteuern und lastabhängig bremsen kann. Die Ansteuerung des Bremssteuerventils des Bremsmoduls 4 erfolgt von den Wiegeventilen 8 der zugeordenten Drehgestelle 1.

Um auch unterschiedlich lange Lastenträger 2 einsetzen zu können, sind Bremszugstangen 5 unterschiedlicher Länge einbaubar.

Die G/P-Umstelleinrichtung, die Ein-/Aus-Betätigung der Bremse und die Handbremsbetätigung sind längenverstellbar, d. h. ein- und ausschiebbar ausgebildet, damit im eingeschobenen Zustand des Bremsmodul 4 von oben in den Lastenträger 2 einsetzbar ist und die Betätigungselemente danach bündig zum Außenlangträger verbracht werden können.

Das Bremsmodul 4 wird nach dem Einsetzten in den Lastenträger 2 mittels eines Kupplungschlauchs 9 und den Schlauchkupplungselementen 6 mit der Hauptluftleitung verbunden. Die Bremszugstangen 5 werden mit dem Bremszuggestänge des Drehgestelles 1 verbunden.

Um die notwendige Bremskraft sicher aufzubringen, sind vorzugsweise Bremszylinder von mindestens 14 Zoll Durchmesser vorzusehen.

Durch das neue Bremssystem, ist es möglich, nur jeden zweiten Lastenträger 2 mit einem Bremsmodul 4 bestücken zu müssen, wobei dennoch alle Drehstelle 1 gebremst sind, da die zugeordneten Drehgestelle 1 von dem Bremsmodul 4 auf den benachbarten Lastenträger 2 betätigt werden.

Weiter ist es möglich mehrere ungebremste Lastenträger 2 bzw. Drehgestelle 1 in Reihe anzuordnen.

## Patentansprüche

1. Ganzzug, bestehend aus Drehgestellen mit dazwischen eingehängten Lastenträgern sowie einem Bremssystem, **dadurch gekennzeichnet, dass** das Bremssystem ein Bremsmodul (4) aufweist, welches als eine eigenständige, kompakte Einheit ausgebildet und über eine Aufnahmeeinrichtung (3) lösbar mit dem Lastenträger (2) verbindbar ist und dass das Bremsmodul (4) die Teile der Bremsseinrichtung enthält, die üblicherweise verteilt am Lastenträger (2) befestigt sind.

2. Ganzzug nach Anspruch 1, **dadurch gekennzeichnet, dass** das Bremsmodul (4) summarisch oder alternativ die Komponenten Bremszugstange (5), Bremszylinder, Gestängeteller, Bremshebel, Bremssteuerventil, G/P-Umstelleinrichtung, Ein-/Aus-Betätigung der Bremse, Lösezug, Handbremsbetätigung und Schlauchkupplungselement (6) zur Verbindung mit der Hauptluftleitung (7) aufweist.

3. Ganzzug nach Anspruch 1 oder 2, **dadurch gekennzeichnet, dass** das Bremsmodul (4) stapelbar und kranbar ausgebildet ist.

4. Ganzzug nach einem oder mehreren der Ansprüche 1 bis 3, **dadurch gekennzeichnet, dass** ein Bremsmodul (4) geeignet ist, zwei Drehgestelle (1) anzusteuern und zu bremsen und zu diesem Zwecke zwei Bremszylinder und zwei Bremszugstangen (5) aufweist, von denen jeweils eines je einem Drehgestell (1) zugeordnet ist.

5. Ganzzug nach einem oder mehreren der Ansprüche 1 bis 4, **dadurch gekennzeichnet, dass** die Bremszugstongen (5) löngenvoriabel ausgeführt sind.

6. Ganzzug nach einem oder mehreren der Ansprüche 1 bis 5, **dadurch gekennzeichnet, dass** die G/P-Umstelleinrichtung, die Ein-/Aus-Betätigung der Bremse und die Handbremsbetätigung längenverstellbar ausgebildet sind.

7. Ganzzug nach einem oder mehreren der Ansprüche 1 bis 6, **dadurch gekennzeichnet, dass** der Bremszylinder mindestens ein 14-Zoll-Bremszylinder ist.

8. Ganzzug, nach einem oder mehreren der Ansprüche 1 bis 7, **dadurch gekennzeichnet, dass** das Bremssteuerventil des Bremsmoduls (4) vom Wiegenventil (8) des oder der zugeordneten Drehgestelle (1) angesteuert wird.

## Claims

1. Block train, consisting of bogies with load carriers suspended between them and a brake system, **characterised in that** the brake system exhibits a brake module (4) which is embodied as an independent compact unit and can be connected detachably to the load carrier (2) by means of a receiving device (3), and **in that** the brake module (4) contains the parts of the brake mechanism which are usually fastened distributed on the load carrier (2).

2. Block train according to claim 1, **characterised in that** in summary or alternatively the brake module (4) exhibits the components brake rod (5), brake cylinder, brake rod adjuster, brake lever, brake control valve, G/P change-over unit, brake on/off control mechanism, release cable, handbrake operating mechanism and hose coupling element (6) for connection to the main air line (7).

3. Block train according to claim 1 or 2, **characterised in that** the brake module (4) is embodied so that it can be stacked and craned.

4. Block train according to one or more of claims 1 to 3, **characterised in that** one brake module (4) is capable of actuating and braking two bogies (1) and to this end exhibits two brake cylinders and two brake rods (5) each of which is associated with one bogie (1).

5. Block train according to one or more of claims 1 to 4, **characterised in that** the brake rods (5) are designed so as to be variable in length.

6. Block train according to one or more of claims 1 to 5, **characterised in that** the G/P change-over unit, the brake on/off control mechanism and the handbrake operating mechanism are embodied so as to be adjustable in length.

7. Block train according to one or more of claims 1 to 6, **characterised in that** the brake cylinder is at least a 14 inch brake cylinder.

8. Block train according to one or more of claims 1 to 7, **characterised in that** the brake control valve of the brake module (4) is actuated by the load-proportional valve (8) of the associated bogie or bogies (1).

## Revendications

1. Train complet formé de bogies entre lesquels sont accrochés des supports de charge, et d'un système de freinage, **caractérisé en ce que** le système de freinage comporte un module de freinage (4) qui est conçu comme une unité autonome et compacte et qui est apte à être reliée de manière amovible au support de charge (2) par l'intermédiaire d'un dispositif de réception (3), et **en ce que** le module de freinage (4) contient les éléments du dispositif de freinage qui sont habituellement répartis et fixés sur le support de charge (2).

2. Train complet selon la revendication 1, **caractérisé en ce que** le module de freinage (4), pour résumer ou comme alternative, comporte les éléments constitués par la tige de serrage de frein (5), le cylindre de frein, les disques de timonerie, le levier de frein, la soupape de commande de frein, le dispositif de manoeuvre MV, l'actionnement marche/arrêt du frein, le tirant de desserrage, l'actionnement du frein manuel et l'élément de raccordement à tuyaux (6) à relier à la canalisation d'air principale (7).

3. Train complet selon la revendication 1 ou 2, **caractérisé en ce que** le module de freinage (4) est conçu pour pouvoir être empilé et transporté à l'aide d'une grue.

4. Train complet selon l'une au moins des revendications 1 à 3, **caractérisé en ce qu'**un module de freinage (4) est apte à commander et à freiner deux bogies (1) et comporte à cet effet deux cylindres de frein et deux tiges de serrage de frein (5) associées aux bogies (1) respectifs.

5. Train complet selon l'une au moins des revendications 1 à 4, **caractérisé en ce que** les tiges de serrage de frein (5) sont conçues avec des longueurs variables.

6. Train complet selon l'une au moins des revendications 1 à 5, **caractérisé en ce que** le dispositif de manoeuvre MV, l'actionnement marche/arrêt du frein et l'actionnement de frein manuel sont conçus pour être réglables en longueur.

7. Train complet selon l'une au moins des revendications 1 à 6, **caractérisé en ce que** le cylindre de frein est au moins un cylindre de frein de 14 pouces.

8. Train complet selon l'une au moins des revendications 1 à 7, **caractérisé en ce que** la soupape de commande de frein du module de freinage (4) est commandée par la soupape de traverse de danseuse (8) du ou des bogies associés (1).
